Europäisches Patentamt

European Patent Office

Office européen des brevets

(11) Numéro de publication: **0 232 636 B1**

# FASCICULE DE BREVET EUROPEEN

(45) Date de publication de fascicule du brevet:
14.08.91

(51) Int. Cl.⁵: **G05B 19/04**

(21) Numéro de dépôt: **86402587.9**

(22) Date de dépôt: **21.11.86**

(54) Dispositif d'aide à la maintenance d'une installation électromécanique qui comprend des moyens automatiques de contrôle et de commande.

(30) Priorité: **29.11.85 FR 8517690**

(43) Date de publication de la demande:
**19.08.87 Bulletin 87/34**

(45) Mention de la délivrance du brevet:
**14.08.91 Bulletin 91/33**

(84) Etats contractants désignés:
**AT BE CH DE ES GB GR IT LI LU NL SE**

(56) Documents cités:
**EP-A- 0 051 861**
**EP-A- 0 090 302**
**FR-A- 2 564 651**
**US-A- 3 882 305**
**US-A- 4 213 174**

(73) Titulaire: **SPIE BATIGNOLLES**
**Tour Anjou 33 Quai de Dion-Bouton**
**F-92814 Puteaux(FR)**

Titulaire: **Régie Autonome des Transports Parisiens**
**53 ter, Quai des Grands-Augustins**
**F-75006 Paris(FR)**

(72) Inventeur: **Chanvin, Jean-Louis**
**35 rue Salvador Allende**
**F-92700 Colombes(FR)**
Inventeur: **Cote, Anselme**
**8 rue Pierre Loti**
**F-91330 Yerres(FR)**
Inventeur: **Menou, Georges**
**9 avenue Ronsard**
**F-93270 Sevran(FR)**

(74) Mandataire: **Bouju, André**
**Cabinet André Bouju B.P. 6250**
**F-75818 Paris Cédex 17(FR)**

EP 0 232 636 B1

## Description

La présente invention concerne un dispositif d'aide à la maintenance d'une installation électromécanique à fonctionnement semi-automatique ou entièrement automatique.

Ce dispositif s'applique en particulier mais non limitativement à des installations électromécaniques autonomes telles que des ascenseurs, des escaliers mécaniques, des appareils élévateurs, des trottoirs roulants, des postes de distribution d'énergie, des postes de climatisation ou de ventilation ou autre, dont le fonctionnement est piloté soit par un automatisme classique à logique cablée du type armoire de contrôle et de commande à relais, soit par un automatisme à logique programmée du type contrôleur programmable industriel.

Le fonctionnement des installations précitées étant semi-automatique ou entièrement automatique, il est indispensable d'en assurer une surveillance constante.

En pratique, quel que soit le type d'installation, on distingue généralement deux niveaux de surveillance : la surveillance fonctionnelle qui est assurée le plus souvent localement par des agents d'exploitation responsables de tout ou partie du fonctionnement de l'installation et, la surveillance technique qui est assurée par des agents de maintenance responsables de la remise en état ou du maintien en état de l'installation.

Pour remplir ces deux fonctions de surveillance, on fait appel à des dispositifs de veille qui transmettent automatiquement aux agents d'exploitation toute indication sur le fonctionnement de l'installation et à des dispositifs d'aide à la maintenance qui ont pour but d'acquérir et de communiquer les informations permettant aux agents de maintenance d'accomplir leur tâche avec précision et rapidité.

Les centres de maintenance étant généralement géographiquement éloignés de ces installations, il est apparu nécessaire de renvoyer ces informations à distance. On a mis en oeuvre pour cela des liaisons particulières aboutissant sur un calculateur ou des liaisons téléphoniques spécialisées aboutissant sur un terminal informatique.

Certains dispositifs connus réalisent simultanément les deux fonctions de surveillance précitées. Pour répondre à des impératifs de sécurité, ces dispositifs doivent en principe utiliser des lignes de transmission spécialisées aboutissant sur un calculateur central qui interroge en permanence les installations. Ces dispositifs nécessitent une infrastructure complexe et sont rapidement saturés dès que le nombre d'installations à surveiller devient important.

Il existe également des systèmes de veille qui transmettent automatiquement par l'intermédiaire du réseau téléphonique public les informations à distance.

Ces systèmes simples et peu coûteux ne présentent toutefois pas les garanties de sécurité imposées par les applications industrielles. On constate donc que la réalisation simultanée des deux fonctions de surveillance conduit à faire appel soit à des dispositifs onéreux et difficiles à mettre en oeuvre soit à des dispositifs peu fiables et peu performants.

Compte tenu des impératifs de sécurité à respecter et du grand nombre d'installations électriques dont il faut généralement simultanément assurer la maintenance, il s'est avéré indispensable de réaliser de façon tout à fait indépendante les deux fonctions de surveillance précitées.

Le document FR-A-2 564 651 au nom de SPIE-BATIGNOLLES décrit un dispositif d'interfaces électroniques pour le contrôle et la commande à distance de tableaux de distribution d'énergie électrique relié avec un système de gestion. Ce dispositif comporte une unité centrale à microprocesseur reliée au moyen d'une liaison normalisée à quatre conducteurs à un équipement de maintenance. Toutefois, ce dispositif s'applique spécifiquement aux tableaux de distribution d'énergie. Il n'est pas non plus adapté pour réaliser à distance la surveillance technique de n'importe quelle installation électromécanique. Dans ce dispositif connu, les informations transitant entre les unités de commande locale et de commande à distance et les systèmes de gestion sont à la fois des ordres ou commandes à destination des tableaux d'énergie et des informations sur l'état et le fonctionnement desdits tableaux, ainsi que des signaux d'interrogation en provenance d'équipements de télédiagnostic. La diversité des signaux transités et le fait que les signaux de commande des équipements présents sur les tableaux de distribution (relais, disjoncteurs, commutateurs, ...) doivent être transmis avec un haut niveau de sécurité et de fiabilité (un ordre intempestif sur un tableau d'énergie pourrait avoir des conséquences techniques néfastes), conduit à l'utilisation quasi obligée de lignes spécialisées. En effet, le réseau téléphonique autocommuté ne garantit pas une totale intégrité de la transmission de signaux de commande qui peuvent présenter une densité d'information relativement complexe.

Le but de la présente invention est de simplifier et/ou de généraliser la mise en oeuvre de ces dispositifs connus, en permettant de réaliser une surveillance technique de toute installation électromécanique à fonctionnement semi-automatique ou automatique à l'aide d'un dispositif d'aide à la maintenance

2

EP 0 232 636 B1

utilisant le réseau téléphonique public et pouvant être raccordé à une installation existante et d'améliorer la qualité du fonctionnement de ces installations, les conditions de travail du personnel de maintenance et les méthodes de maintenance.

La présente invention vise un dispositif d'aide à la maintenance d'installations électromécaniques qui comprennent des moyens automatiques de contrôle et de commande pour contrôler et commander le fonctionnement des installations électromécaniques et pour délivrer des informations sur le fonctionnement de ces installations électromécaniques. Ce dispositif comprend :

- des moyens pour relier le dispositif d'aide à la maintenance aux moyens automatiques de contrôle et de commande ;
- au moins un terminal de vidéotélécommunication extérieur de surveillance ;
- plusieurs unités de gestion comprenant chacune des moyens pour analyser en permanence et traiter les informations délivrées par les moyens automatiques de contrôle et de commande et pour analyser des interrogations provenant du terminal de vidéotélécommunication et envoyer vers celui-ci les informations précitées.

Suivant l'invention, ce dispositif est caractérisé en ce que chaque unité de gestion est reliée à une installation électromécanique à surveiller et en ce que le dispositif d'aide à la maintenance comprend en outre une unité pilote de gestion par l'intermédiaire de laquelle chaque unité de gestion est en communication via un réseau téléphonique public avec le terminal de vidéotélécommunication, et un modem relié d'une part à l'unité pilote de gestion et d'autre part, audit réseau téléphonique public.

Selon ce dispositif, il est possible, pour n'importe quelle installation électromécanique qui en est équipée, d'obtenir à la demande de manière simple et rapide et depuis n'importe quel terminal de vidéotélécommunication raccordé au réseau téléphonique public, les informations suivantes :

- en temps réel, les états de fonctionnement de l'installation ;
- le motif précis des arrêts de l'installation ;
- les date et heure auxquelles se sont produits des événements tels que les arrêts précités ;
- la chronologie des événements ;
- des statistiques permettant d'adapter les opérations de maintenance aux conditions d'utilisation de l'installation ;
- tous renseignements permettant d'évaluer la qualité du fonctionnement de l'installation.

Ce mode de surveillance ne nécessite aucune infrastructure particulière et peut être de ce fait appliqué au moindre coût à une pluralité d'installations électromécaniques dont on peut ainsi connaître à tout instant et avec toutes les garanties de sécurité l'état de fonctionnement.

Selon une version avantageuse de l'invention, les moyens de l'unité de gestion pour analyser et traiter les informations délivrées par les moyens automatiques de commande et de contrôle de l'installation électromécanique sont reliés à ces moyens automatiques, soit par l'intermédiaire d'un liaison série normalisée à quatre conducteurs lorsque ces moyens automatiques comprennent un contrôleur programmable industriel, soit par l'intermédiaire d'une liaison "tout ou rien" et d'un circuit d'interfaces "entrée-sorties" lors que ces moyens automatiques comportent une armoire de contrôle et de commande à relais.

Selon une autre version avantageuse de l'invention, dans le cas où plusieurs unités de gestion sont reliées chacune à une installation électromécanique à surveiller, l'unité pilote de gestion reliée à ces unités de gestion est constituée par un circuit électronique identique à celui desdites unités de gestion et est reliée auxdites unités de gestion par l'intermédiaire d'un circuit diffuseur assurant l'isolement galvanique entre l'unité pilote de gestion et ces unités de gestion et la concentration des liaisons correspondantes vers le modem unique raccordé au réseau téléphonique public.

D'autres particularités et avantages de l'invention apparaîtront encore dans la description ci-après :

Aux dessins annexés donnés à titre d'exemples non limitatifs :

- la figure 1 est le schéma d'ensemble d'un dispositif selon l'invention ;
- la figure 2 est un schéma synoptique illustrant le fonctionnement d'un dispositif selon l'invention ;
- la figure 3 est le schéma d'ensemble d'un dispositif selon l'invention dans le cas d'une installation électromécanique équipée d'un contrôleur programmable industriel ;
- la figure 4 est le schéma d'ensemble d'un dispositif selon l'invention dans le cas d'une installation électromécanique équipée d'une armoire de contrôle et de commande à relais ;
- la figure 5 est le schéma d'ensemble d'un dispositif selon l'invention dans le cas de plusieurs unités de gestion raccordées au même modem par l'intermédiaire d'une unité pilote de gestion ;
- la figure 6 est le schéma de l'unité de gestion d'un dispositif selon l'invention ;
- la figure 7 est un diagramme illustrant les liaisons entre les cartes "entrées-sorties" "tout ou rien" et découplage et une unité de gestion d'un dispositif selon l'invention ;
- la figure 8 est le schéma de la carte "entrées-sorties" "tout ou rien" ;

3

EP 0 232 636 B1

- la figure 9 est le schéma de la carte "entrées-sorties" découplage ;
- la figure 10 est le schéma du circuit diffuseur ;
- la figure 11 est un schéma synoptique illustrant l'organisation du logiciel de programmation de l'unité de gestion d'un dispositif selon l'invention, et
- la figure 12 est un schéma synoptique illustrant les différentes phases opératoires d'un dispositif selon l'invention.

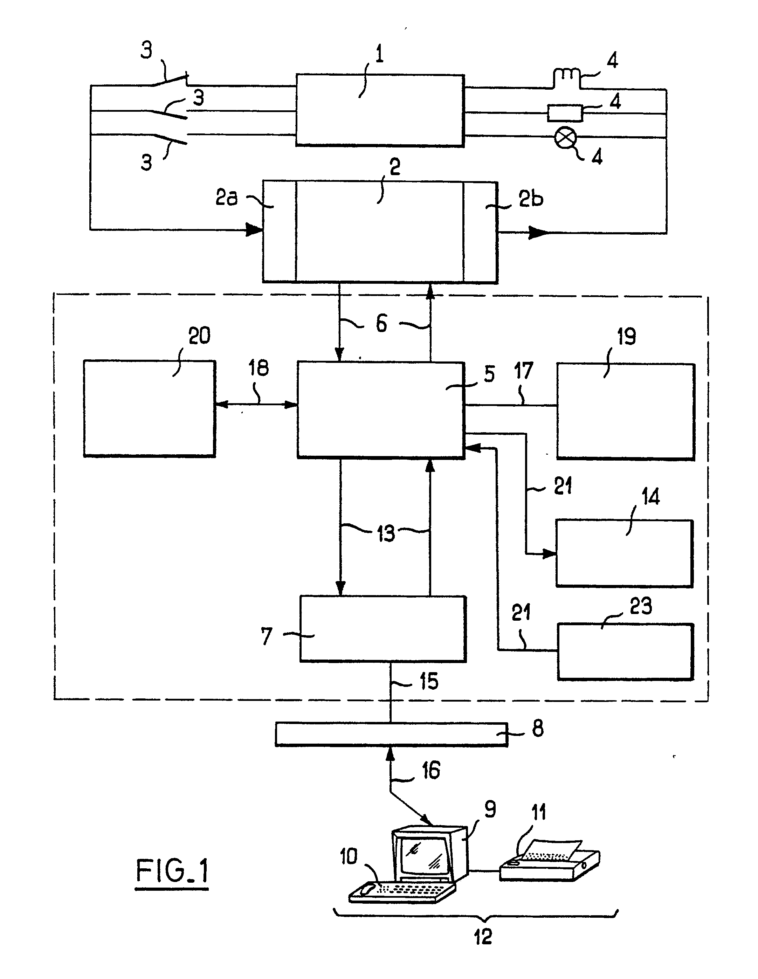

Sur le schéma d'ensemble de la figure 1, on voit que le dispositif d'aide à la maintenance d'une installation électromécanique 1 qui comprend des moyens automatiques de contrôle et de commande, c'est-à-dire un automatisme 2 ayant des entrées 2a telles que des capteurs 3 et des sorties 2b telles que des actionneurs 4 comporte essentiellement :

- une unité de gestion 5 qui sera détaillée plus loin, reliée aux moyens automatiques de contrôle et de commande 2 par l'intermédiaire d'une liaison 6 normalisée du type série RS 422 ou RS 232C comportant quatre conducteurs (deux conducteurs d'émission et deux conducteurs de réception) dans le cas d'une installation électromécanique pilotée par un contrôleur programmable industriel ou, dans le cas d'une installation électromécanique équipée d'une armoire de contrôle et de commande à relais, du type "tout ou rien" ;
- un moduleur-démoduleur 7 qui sera désigné par modem dans la suite de la description. Ce modem est de type standardisé compatible avec le réseau téléphonique public autocommuté 8, c'est-à-dire qu'il permet le raccordement de l'unité de gestion 5 au réseau téléphonique public 8 auquel il est relié par l'intermédiaire d'une ligne téléphonique classique 15 et d'au moins un autocommutateur (non représenté) ;
- un terminal de vidéotélécommunication extérieur de surveillance 12 adapté pour être directement raccordé au réseau téléphonique public 8 par une ligne téléphonique 16 et au moins un autocommutateur (non représenté).

L'unité de gestion 5 est reliée au modem 7 par l'intermédiaire d'une liaison normalisée 13 de type série RS 232C ou boucle de courant 0-20mA à quatre conducteurs.

L'unité de gestion 5 est raccordée par une liaison de type "tout ou rien" 17 à des moyens d'alimentation électrique 19 capables de délivrer des tensions électriques alternatives de 24V, 110V et 220V et de fréquence 50 Hz, de 110V et de fréquence 60 Hz, et continues de 5V, -12V à +12V et 24V.

L'unité de gestion 5 comporte des moyens pour analyser en permanence, traiter et mémoriser les informations délivrées par les moyens automatiques de contrôle et de commande 2 de l'installation électromécanique 1 ainsi que des moyens pour analyser les interrogations provenant du terminal de vidéotélécommunication 12 et pour envoyer vers celui-ci les informations précitées sous forme d'images. Ces moyens seront détaillés plus loin.

L'unité de gestion 5 est également reliée par une liaison normalisée 21 de type série RS 232C ou boucle de courant 0-20mA à des moyens 14 pour consigner localement les informations précitées et à un clavier 23 pour dialoguer également localement avec l'unité de gestion 5. Les moyens de consignation 14 sont avantageusement une imprimante permettant l'édition sous forme d'un texte horodaté de toute information dont la demande a été faite localement. Cette interrogation locale peut être effectuée soit en utilisant le clavier 23, soit par l'intermédiaire des moyens d'interrogation et de visualisation locales 20 de l'unité de gestion 5 reliés aux "entrées-sorties" de cette unité de gestion par une liaison 18 de type "tout ou rien". Les moyens d'interrogation et de visualisation locales 20 qui seront détaillés plus loin, permettent en outre la visualisation locale des états de fonctionnement de l'unité de gestion 5.

L'imprimante 14 consigne également, au fur et à mesure de leur apparition, les défauts de l'installation électromécanique 1.

Le terminal de vidéotélécommunication 12 comporte un écran de visualisation 9, un clavier 10 et une imprimante 11 et est adapté pour interroger à distance l'unité de gestion 5 par l'intermédiaire du réseau téléphonique public 8 et pour recevoir sous forme d'images les informations délivrées par les moyens automatiques de contrôle et de commande 2 de l'installation électromécanique 1 qui ont été préalablement analysées et traitées par l'unité de gestion 5. Ce terminal est de type classique et on peut se le procurer auprès de tout revendeur spécialisé. Il fonctionne de la manière suivante: la visualisation des informations sous forme d'images est réalisée au moyen d'un tube cathodique (non représenté) piloté par une carte électronique (non représentée) appelée carte vidéo qui transforme les signaux émis par un modem (non représenté) raccordé au réseau téléphonique public en images. L'interrogation de l'unité de gestion 5 s'effectue au moyen du clavier 10 qui comporte des touches alphanumériques, de fonctions ou de ponctuation. La composition d'un code prédéterminé permet d'entrer en communication avec l'unité de gestion 5 et de recevoir à la demande les informations précitées sous forme d'images.

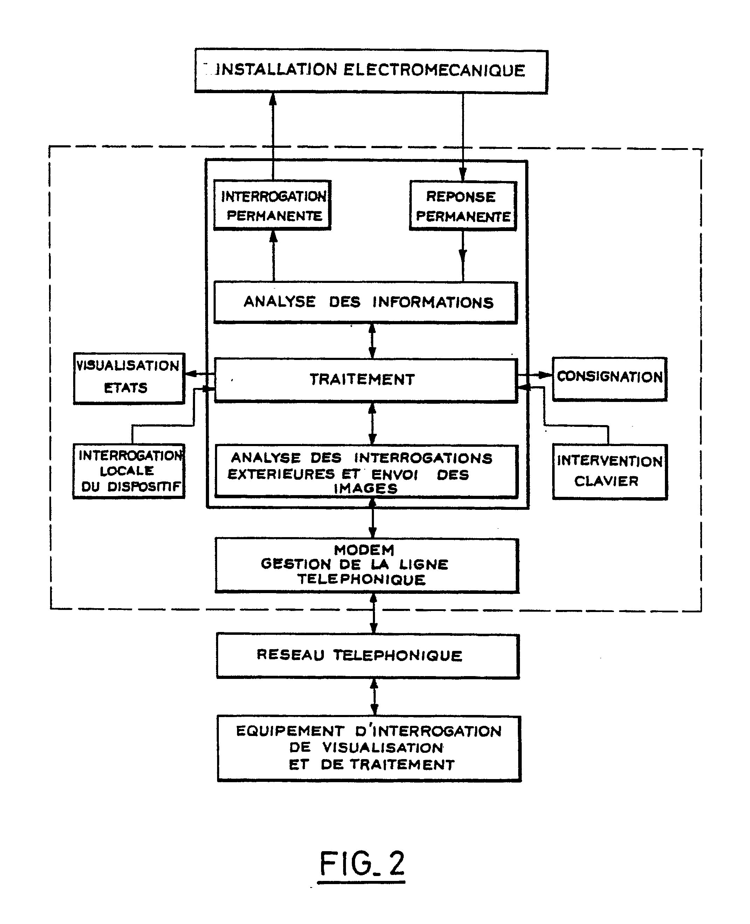

Le synoptique de la figure 2 illustre de manière schématique le fonctionnement du dispositif selon

4

l'invention tel qu'il a été décrit en référence à la figure 1. Le fonctionnement de ce dispositif sera explicité plus loin.

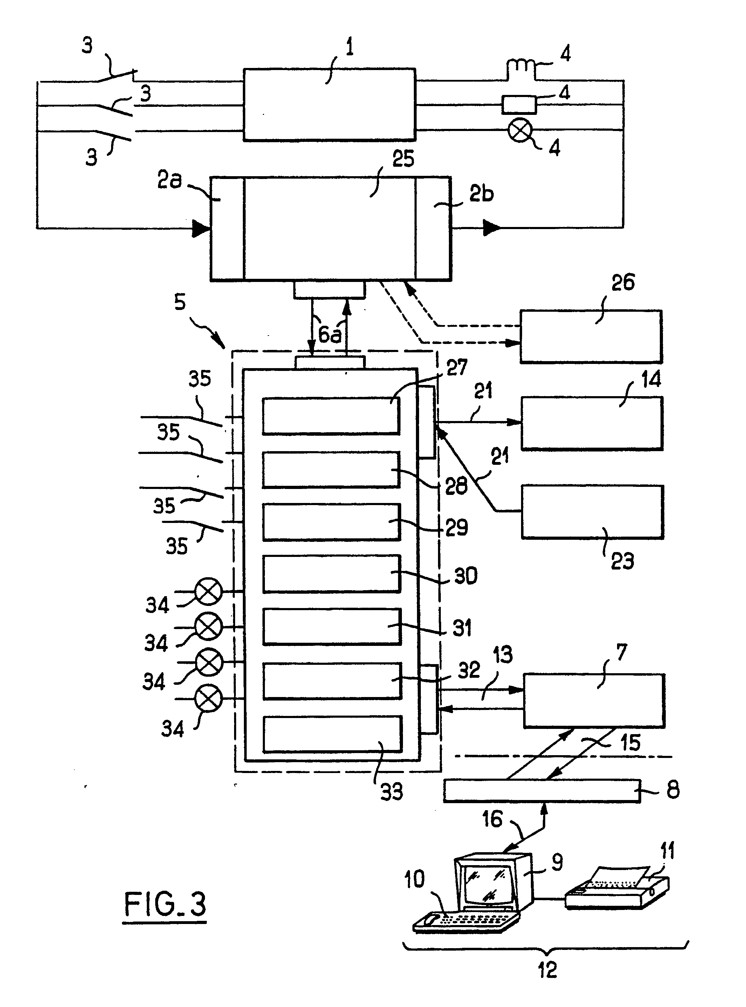

A la figure 3, on a représenté le schéma d'ensemble d'un dispositif selon l'invention dont les moyens automatiques de contrôle et de commande 2, 3, 4 de l'installation électromécanique 1 comprennent un contrôleur programmable industriel 25 . Ce contrôleur programmable industriel 25 est relié à l'unité de gestion 5 au moyen d'une liaison 6a identique à la liaison 6 décrite en référence à la figure 1 et comporte en outre une console de programmation 26.

L'unité de gestion 5 comprend des moyens 27 pour stocker sous forme de pile des messages de défauts de l'installation électromécanique 1, des moyens 28 pour stocker de manière identique des messages d'états de cette installation, des moyens 29 pour stocker des messages statistiques, des moyens 30 pour stocker les caractéristiques générales de l'installation, des moyens 31 pour réaliser des opérations de télécontrôle et de télémesure, une messagerie électronique 32 qui permet l'édition automatique par l'imprimante 14 des textes frappés sur le clavier 10 du terminal de vidéotélécommunication 12 et des moyens 33 pour horodater les messages précités.

Les moyens d'interrogation et de visualisation locales 20 de l'unité de gestion 5 permettent de dialoguer localement avec les moyens 27 pour stocker des messages de défauts, avec les moyens 28 pour stocker des messages d'états et avec les moyens 29 pour stocker des messages statistiques par l'intermédiaire d'actionneurs 35, et de visualiser au moyen de diodes électroluminescentes 34 ou de relais (non représentés) des états de fonctionnement du dispositif tels que "chien de garde", liaison avec le contrôleur programmable industriel 25 hors-service ou liaison avec le réseau téléphonique public 8 hors service.

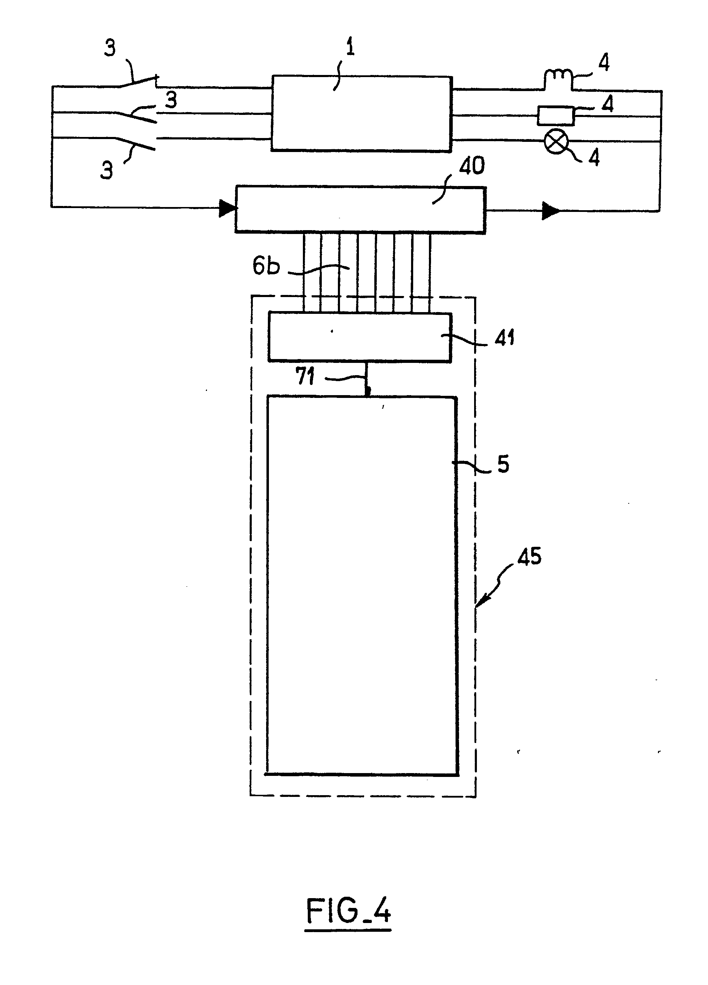

A la figure 4, on a représenté le schéma d'ensemble d'un dispositif selon l'invention dont les moyens de contrôle et de commande 2, 3, 4 de l'installation électromécanique 1 comprennent une armoire de contrôle et de commande à relais 40.

Cette armoire de contrôle et de commande à relais 40 est reliée à l'unité de gestion 5 décrite en référence à la figure 3 par l'intermédiaire d'une liaison 6b de type "tout ou rien" et par un circuit d'interfaces "entrées-sorties" 41. Ce circuit d'interfaces "entrées-sorties" permet la surveillance de tout type d'installation électromécanique à fonctionnement semi-automatique ou entièrement automatique au moyen du dispositif décrit en référence à la figure 1.

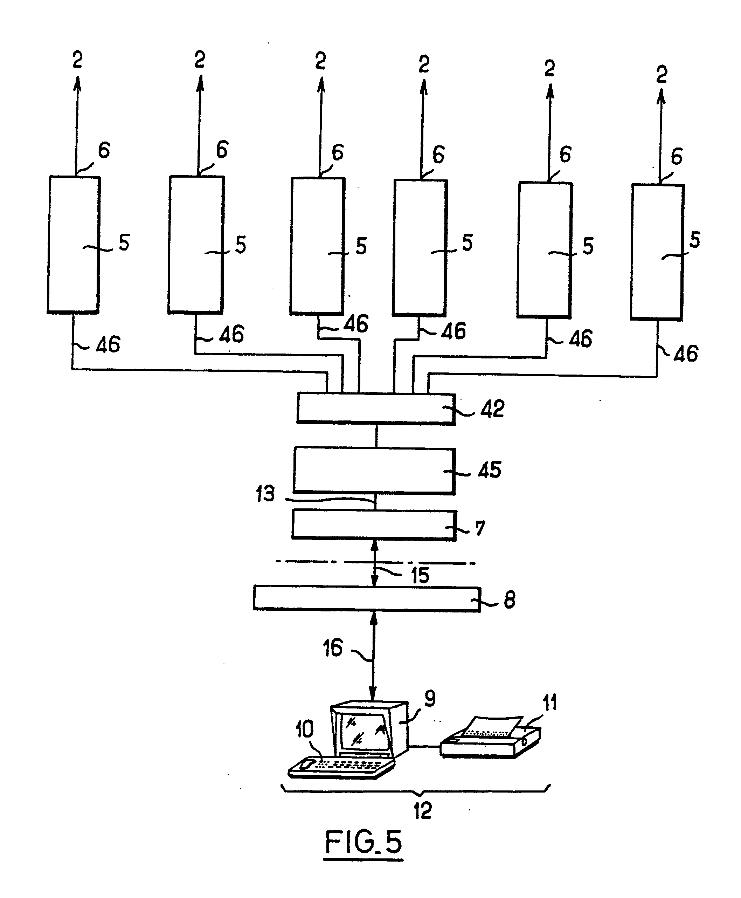

La figure 5 illustre une réalisation préférée d'un dispositif selon l'invention dans laquelle plusieurs unités de gestion 5 reliées chacune à une installation électromécanique à surveiller 1, sont raccordées à une unité pilote de gestion 45 par l'intermédiaire d'un circuit diffuseur 42 qui sera détaillé plus loin.

L'unité pilote de gestion 45 est reliée au modem 7 par une liaison normalisée 13 du type série RS 232C ou boucle de courant 0-20mA à quatre conducteurs. Chaque unité de gestion 5 est reliée d'une part au circuit diffuseur 42 par une liaison 46 du même type que la liaison 13 et d'autre part à l'installation électromécanique qu'elle surveille par une liaison 6 décrite en référence à la figure 1.

Cette unité pilote de gestion 45 permet le raccordement au réseau téléphonique public 8 au moyen d'un modem unique 7 et d'une seule ligne téléphonique 15.

Cette unité pilote de gestion 45 ne dialogue qu'avec une seule unité de gestion 5 à la fois. Cependant, lorsqu'aucune interrogation n'est émise depuis le terminal de vidéotélécommunication extérieur de surveillance 12, elle assure de manière cyclique la surveillance des liaisons 6, 46 vers les installations 1 dont elle a la maîtrise et signale toute interruption de ces liaisons.

Le circuit diffuseur 42 assure en outre un parfait isolement galvanique entre l'unité pilote de gestion 45 et chaque unité de gestion 5.

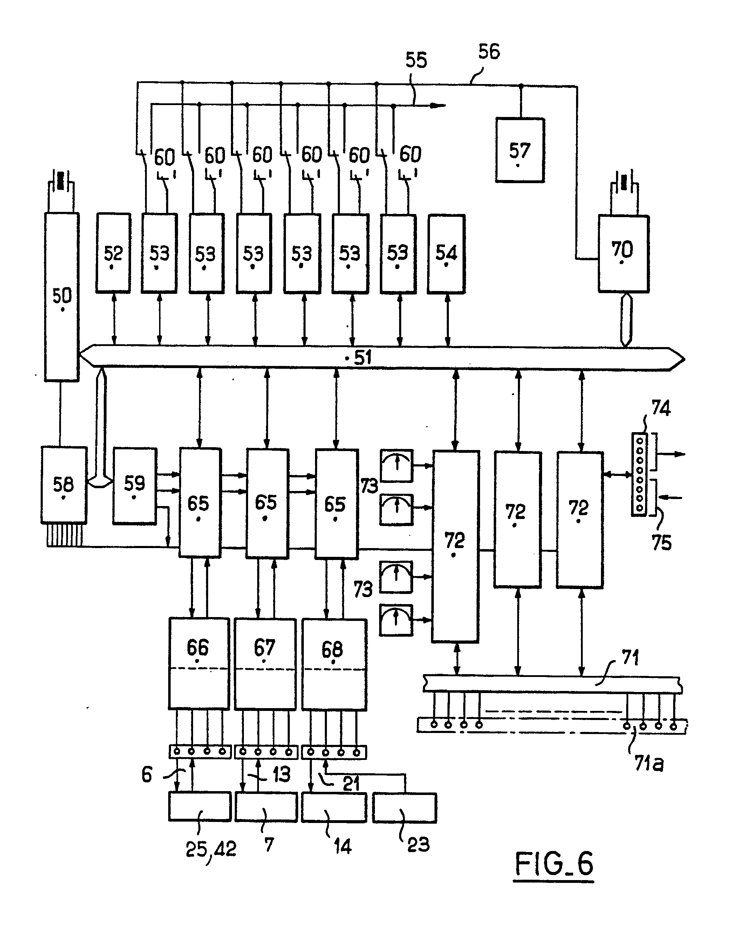

On va maintenant détailler l'unité de gestion 5 en référence à la figure 6. Cette unité de gestion comprend un microprocesseur 50 du type 8085 dont le bus 51 est relié à une mémoire REPROM 52 de huit K octets type 2764, à une série de mémoires 53 RAM/REPROM de huit K octets chacune, type 2764/6264 pouvant être commutées au moyen d'interrupteurs 60 soit en RAM soit en REPROM et à une mémoire 54 RAM type 6264 de huit K octets.

Les mémoires 53 sont alimentées électriquement en +5V, par une ligne d'alimentation 55 venant des moyens d'alimentation électrique 19 lorsqu'elles sont commutées en REPROM ou par une ligne d'alimentation 56 venant d'une pile alcaline par exemple au lithium 57 lorsqu'elles sont commutées en RAM.

Le microprocesseur 50 est en outre relié à un contrôleur d'IT 58 type 8259A qui est lui-même relié au bus 51 et à une horloge triple 59 (timer type 8253-5) puis à trois composants 65 type USART 8251A eux-mêmes reliés au bus 51 et à des composants 66, 67, 68 d'adaptation à la liaison 6a type RS 422 ou RS 232C vers le contrôleur programmable industriel 25 ou à la liaison 46 vers le circuit diffuseur 42, à la liaison 13 type RS 232C ou boucle de courant 0-20mA vers le modem 7 et à la liaison 21 vers l'imprimante 14 et le clavier 23.

Le bus 51 du microprocesseur 50 est également relié à une horloge à quartz 70 (32,768 kHz) alimentée par la pile alcaline 57 ainsi qu'à un bus parallèle 71 qui peut être connecté en 71a au circuit d'interfaces 41, au moyen de trois composants 72 type 8255. Le premier de ces composants 72 est relié à deux roues codeuses décimales 73, tandis que le troisième est relié à quatre sorties "tout ou rien" 74 et à quatre entrées "tout ou rien" 75.

Les composants décrits ci-dessus constituent les moyens de l'unité centrale 5 pour analyser en permanence, traiter, mémoriser et consigner localement les informations délivrées par le contrôleur programmable industriel 25 ou l'armoire de contrôle et de commande à relais 40 qui pilote le fonctionnement de l'installation électromécanique à surveiller 1, pour analyser les interrogations émanant du terminal de vidéotélécommunication 12 et retransmettre vers celui-ci les informations précitées, et pour interroger localement l'unité de gestion 5 et visualiser localement les états de fonctionnement de cette unité de gestion.

La pile alcaline 57 permet de sauvegarder en cas de coupure de l'alimentation électrique de l'unité de gestion 5, les informations stockées dans les mémoires RAM 53 ainsi que de secourir le fonctionnement de l'horloge 70 qui assure l'horodatage de ces informations.

Les roues codeuses 73 sont utilisées pour le dialogue entre l'unité pilote de gestion 45 et chaque unité de gestion 5 qui en dépend. Les sorties 74 permettent la visualisation locale des états de fonctionnement du dispositif ("chien de garde", liaisons vers les moyens automatiques de commande 2, 3, 4 ou vers le modem 7 hors service) tandis que les entrées 75 autorisent l'interrogation locale du dispositif.

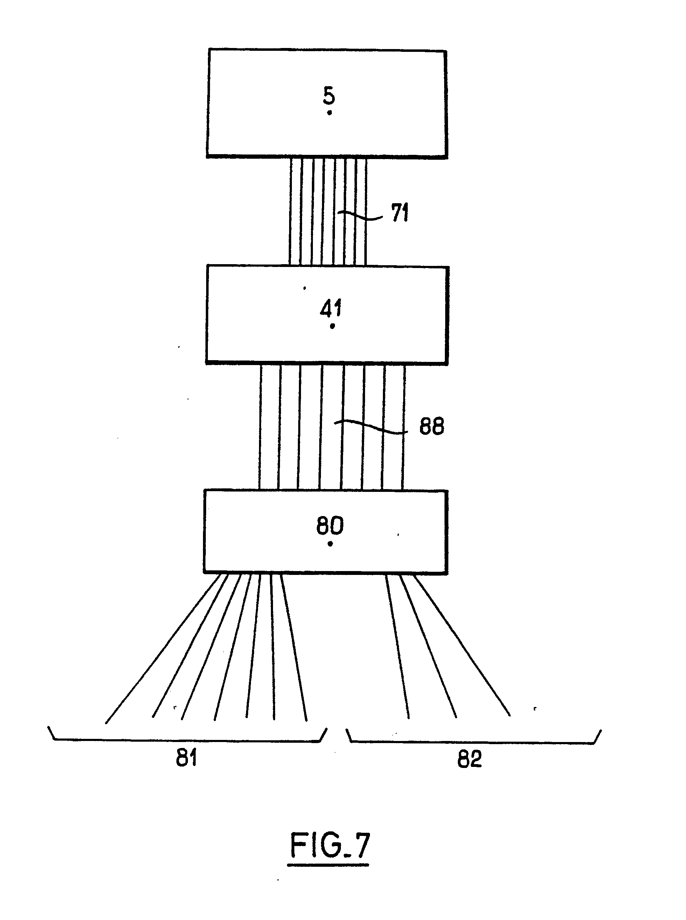

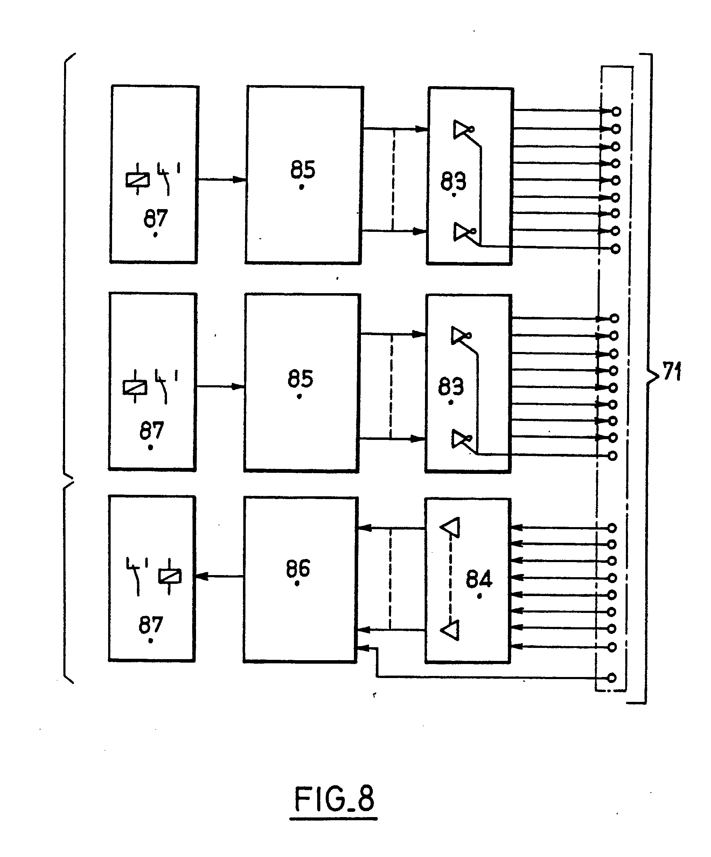

La figure 7 illustre les liaisons entre l'unité centrale de gestion 5 et les circuits d'interfaces qui permettent le raccordement de cette unité de gestion à l'armoire de contrôle et de commande à relais 40 (voir figure 4) de l'installation à surveiller 1. Dans ce cas, la liaison avec le contrôleur programmable industriel 25 n'est pas exploitée. Le bus parallèle "entrées-sorties" 71 de l'unité de gestion 5 est relié au circuit d'interfaces "entrées-sorties" 41. Ce circuit d'interfaces qui est détaillé à la figure 8 permet l'acquisition de 16 entrées "tout ou rien" 83 découplées par les relais 87 et filtrées par les filtres RC 85. Le circuit d'interfaces 41 permet également la gestion de huit sorties libres de potentiel 84 stockées dans la mémoire 86 et découplées par les relais 87.

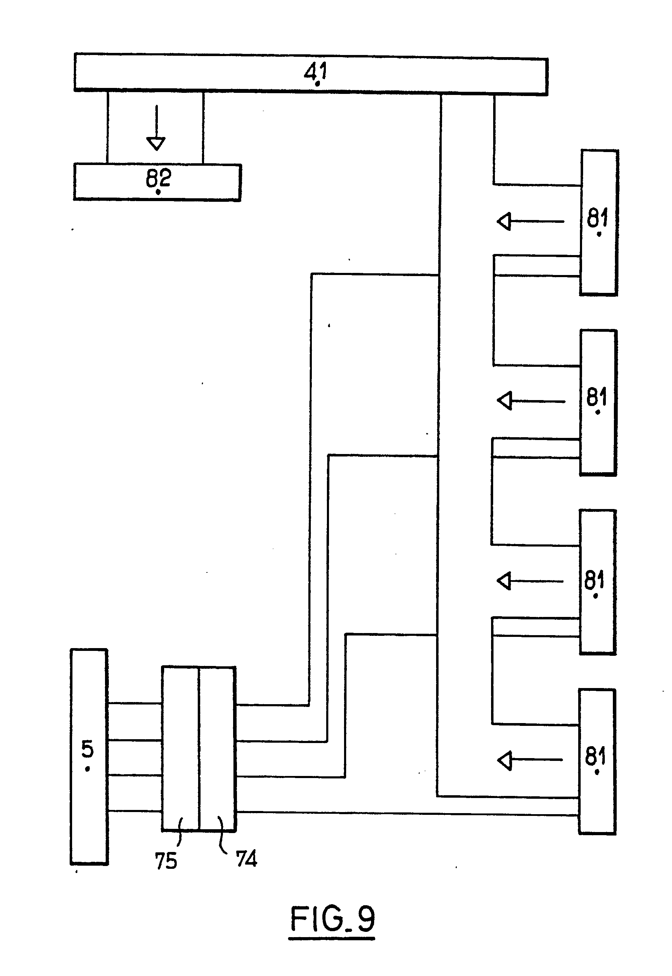

Ainsi que l'illustre la figure 7, le circuit d'interfaces 41 peut être relié par une liaison "tout ou rien" 88 à une carte de découplage et de multiplexage 80 à seize entrées et huit sorties permettant l'acquisition de soixante quatre entrées "tout ou rien" 81 et la gestion de huit sorties libres de potentiel "tout ou rien" 82 découplées par relais. Cette carte de découplage et de multiplexage qui est détaillée à la figure 9 assure le multiplexage des seize entrées 83 du circuit d'interfaces 41 avec les quatre entrées-sorties 75, 74 de l'unité de gestion 5.

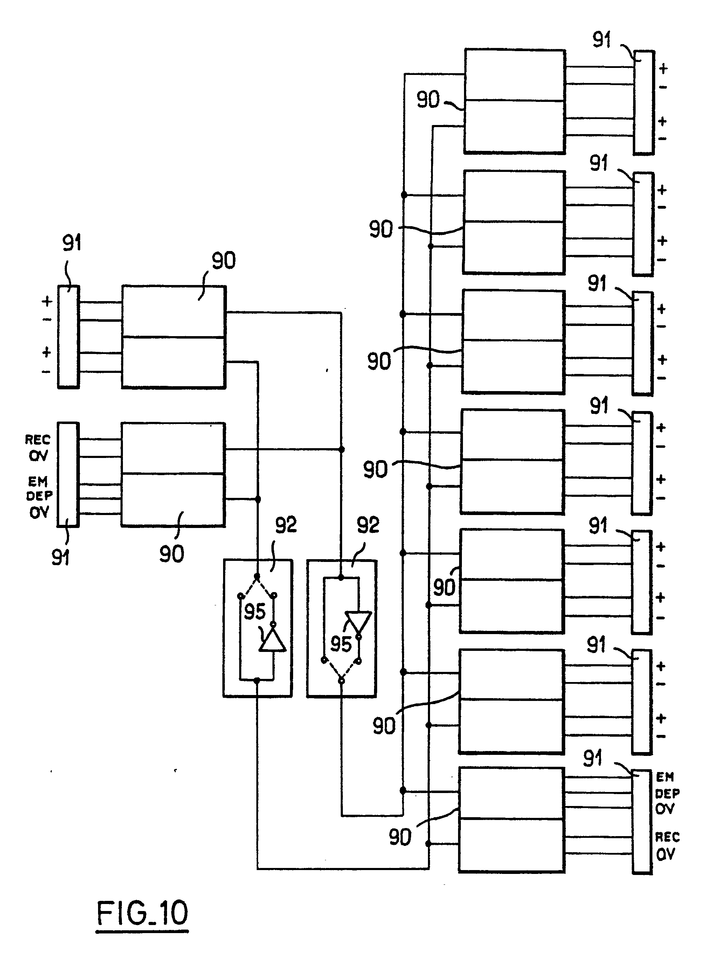

On a détaillé à la figure 10 le circuit diffuseur 42. Ce circuit diffuseur 42 permet le raccordement d'une série d'unités de gestion 5 à une unité pilote de gestion 45 telle que décrite en référence à la figure 5 au moyen de composants d'adaptation 90, de composants de liaison 92 comportant des diodes anti-retour 95 et de borniers 91 par l'intermédiaire de liaisons type RS 232C ou boucle de courant 0-20mA.

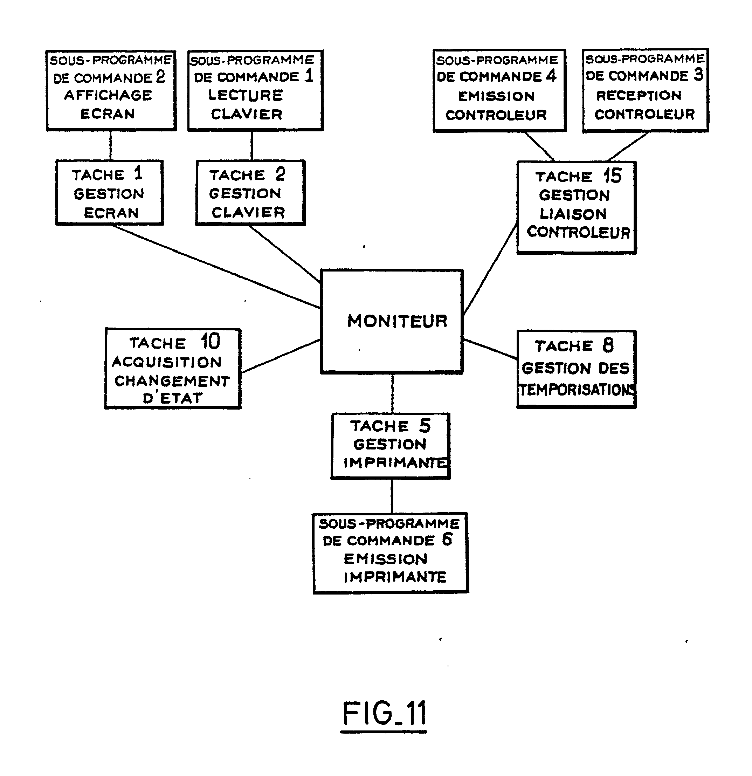

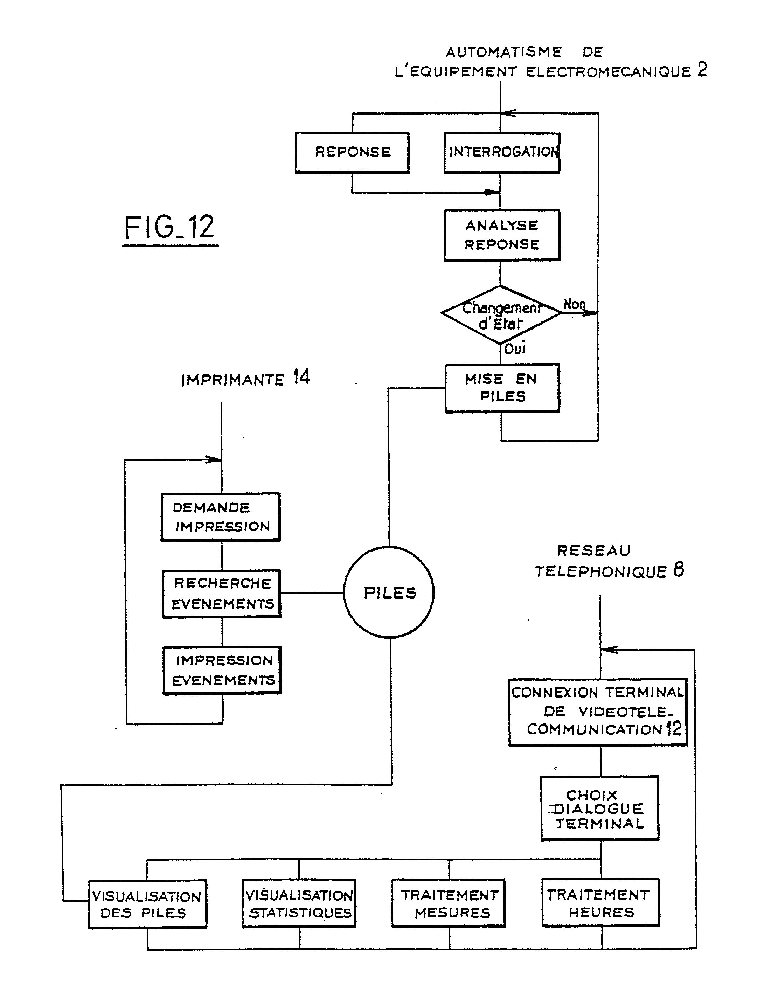

On va maintenant décrire à l'aide des figures 11 et 12 et de l'exemple d'une installation électromécanique constituée d'un escalier mécanique piloté par un contrôleur programmable industriel le fonctionnement d'un dispositif d'aide à la maintenance selon l'invention.

Le logiciel de programmation de l'unité de gestion 5 est organisé (fig 11) autour d'un moniteur multitâches qui gère seize tâches ou éléments de programme et huit sous-programmes de commande (ou handlers).

Le logiciel utilise des tables comprenant les informations nécessaires à son fonctionnement. Ce sont :
- les tables des informations délivrées par le contrôleur programmable industriel 25,
- les piles des évèvements (états et défauts de l'installation),
- les tables des messages à imprimer ou à visualiser,
- les tables de correspondance entre les informations reçues et les évèvements à stocker en mémoire.

Il existe deux tables des informations reçues : les informations reçues immédiatement et les informations reçues auparavant, ceci afin de permettre la détection des changements d'états.

Ces tables contiennent des bits internes du contrôleur programmable industriel 25 lues directement par l'unité de gestion 5.

Il v a en outre deux piles d'évènements : celle des défauts (défauts AAI : arrêt avec intervention) et celle des états (états ASI : arrêt sans intervention).

Ces deux piles sont organisées sous la forme de cent vingt huit évènements, chaque évènement comprenant huit octets.

Chaque évènement est organisé de la façon suivante :

```
        7   6   5   4   3   2   1   0
        ----------------------------------

                        Jour

                        Mois

                        Année

                        Heure

                        Minute

                        Seconde

                        Réserve

                Numéro de message

        ----------------------------------
```

Les tables des messages à imprimer sont organisées sous la forme de textes successifs de 36 caractères.

La table des textes AAI (arrêt avec intervention) comprend cinquante et un textes qui sont dans le cas de l'escalier mécanique les suivants :
- AAI DECLENCHEMENT RELAIS DE SECURITE
- AAI PLAQUE PALIERE INFERIEURE DROITE
- AAI PLAQUE PALIERE INFERIEURE GAUCHE
- AAI PLAQUE PALIERE SUPERIEURE DROITE
- AAI PLAQUE PALIERE SUPERIEURE GAUCHE
- AAI DEFAUT GALET DE MARCHE DROIT
- AAI DEFAUT GALET DE MARCHE GAUCHE
- AAI RUPTURE MAIN-COURANTE DROITE
- AAI RUPTURE MAIN-COURANT GAUCHE
- AAI DEJANTEMENT MAIN-COURANTE DROITE
- AAI DEJANTEMENT MAIN-COURANTE GAUCHE
- AAI ENTRAIN. MAIN-COURANTE DROITE
- AAI ENTRAIN. MAIN-COURANT GAUCHE
- AAI CHARIOT TENSEUR DROIT
- AAI CHARIOT TENSEUR GAUCHE
- AAI TRAPPE INFERIEURE
- AAI TRAPPE SUPERIEURE
- AAI CONNECTEUR PRISE D'INSPECTION
- AAI DISCORDANCE RELAIS DE SECURITE
- AAI CAPOT BOUT D'ARBRE MOTEUR
- AAI DEFAUT GALET DE CHAINE DROITE
- AAI DEFAUT GALET DE CHAINE GAUCHE
- AAI NON RETOMBEE FREIN DE FONCTIONNEMENT
- AAI NON LEVEE FREIN DE FONCTIONNEMENT
- AAI NON RETOMBEE FREIN ADDITIONNEL
- AAI NON LEVEE FREIN ADDITIONNEL.
- AAI THERMIQUE MOTEUR
- AAI SURVITESSE
- AAI INVERSION SENS DE MARCHE
- AAI NON RETOMBEE DES CONTACTEURS
- AAI FEU
- AAI RUPTURE DE CHAINE
- AAI DEFAUT DEMARRAGE
- AAI DEFAUT RELAIS SAAI-XSAAI-RAR-UFS

7

- AAI DEFAUT RELAIS DE PHASE
- AAI DEFAUT CEM OU 48 V AEM
- AAI DEFAUT ALIMENTATION C.P.I.
- AAI DEFAUT ALIMENTATION 48 V AEM
- AAI BOUTON POUSSOIR D'ARRET
- AAI DEFAUT BISTABLE
- THERMIQUE POMPE A HUILE
- NIVEAU POMPE A HUILE
- DERANGEMENT CDI
- DEFAUT MARCHE INTERMITTENTE
- BOUTON POUSSOIR D'ARRET CAISSON HAUT
- BOUTON POUSSOIR D'ARRET CAISSON BAS
- BOUTON POUSSOIR D'ARRET AEM
- BOUTON POUSSOIR D'ARRET P.I.
- Réserve
- Réserve
- Réserve

La table des textes ASI (arrêt sans intervention) comprend trente deux textes qui sont pour le même exemple les suivants :

- COMMANDE ENTRETIEN
- COMMANDE NORMALE
- MARCHE MONTEE LOCALE
- MARCHE MONTEE DISTANCE
- MARCHE DESCENTE LOCALE
- MARCHE DESCENTE DISTANCE
- ARRET EXPLOITATION
- ARRET ASSERVISSEMENT
- COUPURE 380 V PEF
- RETOUR 380 V PEF
- COUPURE 48 V TAME
- RETOUR 48 V TAME
- ASI ARRET D'URGENCE INFERIEUR
- ASI ARRET D'URGENCE SUPERIEUR
- ASI ENTREE MAIN-COURANTE INF. DROITE
- ASI ENTREE MAIN-COURANTE INF. GAUCHE
- ASI ENTREE MAIN-COURANTE SUP. DROITE
- ASI ENTREE MAIN-COURANTE SUP. GAUCHE
- ASI PLAQUE PALIERE INFERIEURE DROITE
- ASI PLAQUE PALIERE INFERIEURE GAUCHE
- ASI PLAQUE PALIERE SUPERIEURE DROITE
- ASI PLAQUE PALIERE SUPERIEURE GAUCHE
- ASI ENTRAIN. MAIN-COURANTE DROITE
- ASI ENTRAIN. MAIN-COURANTE GAUCHE
- ASI DECLENCHEMENT RELAIS RASI
- réserve
- réserve
- réserve
- réserve
- réserve
- réserve
- réserve

En permanence le contrôleur programmable industriel 25 est interrogé par l'unité de gestion 5 et ses bits internes ainsi que ses entrées sont lues indépendamment de son propre fonctionnement. Toutefois, le programme du contrôleur programmable industriel 25 positionne de façon déterminée certains de ses bits internes afin de déclencher la mise en pile d'évènements particuliers.

La transmission s'effectue à 2400 bauds.

A la mise sous tension, le microprocesseur 50 reconnaît le nom de l'escalier, le code permettant la lecture et celui permettant l'écriture sur le terminal de vidéotélécommunication 12.

8

EP 0 232 636 B1

Le dialogue avec le terminal de vidéotélécommunication 12 permet de lire l'état de l'escalier, les piles d'évènements, d'envoyer un texte dans la messagerie qui s'inscrit sur l'imprimante 14, de consulter les messages statistiques et d'effectuer la remise à l'heure.

En fonctionnement normal, chaque évènement AAI s'inscrit sur l'imprimante 14 lors de son apparition.

Sur demande, il est possible d'éditer les dix derniers évènements de chaque pile.

Sur demande, il est possible d'éditer les statistiques.

Sur demande encore, il est possible d'éditer le dernier défaut (AAI) et le dernier arrêt (ASI) apparus en phase d'entretien.

Les sous-programmes de commande utilisés sont :

- sous-programme de commande 1 : réception terminal de vidéotélécommunication 12 ;
- sous-programme de commande 2 : émission terminal de vidéotélécommunication 12 ;
- sous-programme de commande 3 : réception contrôleur programmable industriel 25 ;
- sous-programme de commande 4 : émission contrôleur programmable industriel 25 ;
- sous-programme de commande 5 : réception clavier 23 ;
- sous-programme de commande 6 : émission imprimante 14.

Les sous-programmes de commande "émission" émettent des caractères contenus dans une mémoire tampon.

Les sous-programmes de commande "réception" mémorisent dans une mémoire tampon les caractères reçus.

Les tâches utilisées sont :

- tâche 1 : gestion écran 9 du terminal de vidéotélécommunication 12,
- tâche 2 : gestion clavier 10 du terminal de vidéotélécommunication 12,
- tâche 5 : gestion imprimante 14,
- tâche 8 : gestion des temporisations,
- tâche 10 : acquisition des changements d'états,
- tâche 15 : gestion de la liaison avec le contrôleur programmable industriel 25.

La figure 12 illustre schématiquement et en corrélation avec la description qui précède les différentes phases opératoires du dispositif selon l'invention.

Il ressort de ce qui précède que le dispositif d'aide à la maintenance conforme à l'invention permet la surveillance en temps réel, depuis tout lieu géographique où est raccordé au réseau téléphonique public un terminal de vidéotélécommunication de type standard tel que celui connu sous la dénomination MINITEL, de n'importe quelle installation électromécanique à fonctionnement semi-automatique ou entièrement automatique.

Le dispositif conforme à l'invention présente en outre l'avantage d'être d'utilisation souple et aisée et d'optimiser les opérations de maintenance des installations du genre précité.

Bien entendu, l'invention n'est pas limitée aux exemples décrits et représentés, et de nombreux aménagements peuvent être apportés à ces exemples sans sortir du cadre de l'invention.

Le terminal de vidéotélécommunication pourrait être par exemple remplacé par un micro-ordinateur adapté pour être raccordé au réseau téléphonique public.

Ce terminal pourrait être également relié à l'unité de gestion au moyen d'une ligne téléphonique spécialisée. Le circuit diffuseur pourrait être aussi raccordé à un deuxième circuit diffuseur lui-même relié à une deuxième série d'unités de gestion afin de raccorder au réseau téléphonique public par l'intermédiaire d'un seul modem un plus grand nombre d'unités de gestion.

## Revendications

1. Dispositif d'aide à la maintenance d'installations électromécaniques (1) qui comprennent des moyens automatiques de contrôle et de commande (2, 3, 4) pour contrôler et commander le fonctionnement des installations électromécaniques (1) et pour délivrer des informations sur le fonctionnement de ces installations électromécaniques (1) comprenant :
   - des moyens pour relier le dispositif d'aide à la maintenance aux moyens automatiques de contrôle et de commande (2, 3, 4),
   - au moins un terminal de vidéotélécommunication extérieur de surveillance (9, 10, 11),
   - plusieurs unités de gestion (5) comprenant chacune des moyens (50) pour analyser en permanence et traiter les informations délivrées par les moyens automatiques de contrôle et de commande (2, 3, 4) et pour analyser des interrogations provenant du terminal de vidéotélécommunication (9, 10, 11) et envoyer vers celui-ci les informations précitées,
   caractérisé en ce que chaque unité de gestion (5) est reliée à une installation électromécanique à surveiller et en ce que le dispositif d'aide à la maintenance comprend en outre une unité pilote de gestion (45) par l'intermédiaire de laquelle chaque unité de gestion (5) est en communication via un réseau téléphonique public (8) avec le terminal de vidéotélécommunication (9, 10, 11), et un modem (7) relié d'une part à l'unité pilote de gestion (45) et d'autre part, audit réseau téléphonique public (8).

2. Dispositif conforme à la revendication 1, les moyens automatiques de contrôle et de commande (2, 3, 4) de l'installation électromécanique (1) comprenant un contrôleur programmable industriel (25), caractérisé en ce que ce contrôleur programmable industriel est relié par l'intermédiaire d'une liaison série normalisée (6a) à quatre conducteurs, aux moyens (50) de l'unité de gestion (5) pour analyser les informations délivrées par les moyens automatiques de contrôle et de commande (2, 3, 4) de l'installation électromécanique (1).

3. Dispositif conforme à la revendication 1, les moyens automatiques de contrôle et de commande (2, 3, 4) de l'installation électromécanique (1) comprenant une armoire de contrôle et de commande à relais (40), caractérisé en ce que cette armoire à relais est reliée par l'intermédiaire d'une liaison "tout ou rien" (6b) et d'un circuit d'interface "entrées/sorties" (41) aux moyens (50) de l'unité de gestion (5) pour analyser les informations délivrées par les moyens automatiques de contrôle et de commande (2, 3, 4) de l'installation électromécanique (1).

4. Dispositif conforme à l'une des revendications 1 à 3, caractérisé en ce que chaque unité de gestion (5) comprend un microprocesseur (50) programmé pour analyser en permanence les informations délivrées par les moyens automatiques de contrôle et de commande (2, 3, 4) de l'installation à surveiller (1), pour traiter, mémoriser et consigner ces informations, pour analyser les interrogations provenant du terminal extérieur de surveillance (12) et pour envoyer vers ce dernier lesdites informations sous forme d'images.

5. Dispositif conforme à la revendication 4, caractérisé en ce que chaque unité de gestion (5) est reliée par l'intermédiaire d'une liaison série ou boucle de courant normalisée (21) à quatre conducteurs à une imprimante (14) pour consigner localement les informations en provenance de l'installation électromécanique à surveiller (1).

6. Dispositif conforme à l'une des revendications 4 ou 5, caractérisé en ce que chaque unité de gestion (5) comporte en outre une horloge (70) pour horodater les événements mémorisés sous forme de piles par l'unité de gestion (5) et pouvant être consultés par le terminal extérieur de surveillance (12).

7. Dispositif conforme à l'une des revendications 1 à 6, caractérisé en ce que l'unité pilote de gestion (45) est constituée par un circuit électronique identique à celui des unités de gestion (5) et en ce que cette unité pilote de gestion (45) est reliée auxdites unités de gestion (5) par l'intermédiaire d'un circuit diffuseur (42) assurant l'isolement galvanique entre l'unité pilote de gestion (45) et ces unités de gestion et la concentration des liaisons correspondantes (46) vers le modem (7).

8. Dispositif conforme à la revendication 6, caractérisé en ce que chaque unité de gestion comporte en outre une pile alcaline (57) pour sauvegarder en cas de coupure de l'alimentation électrique de l'unité de gestion (5) les événements mémorisés et l'horodatage de ces événements.

9. Dispositif conforme à l'une des revendications 1 à 8, caractérisé en ce que le circuit d'interfaces entre l'armoire de contrôle et de commande à relais (40) de l'installation électromécanique à surveiller (1) et chaque unité de gestion (5) correspondante comporte une carte "entrées-sorties" "tout ou rien" (41) permettant l'acquisition de seize entrées "tout ou rien" découplées par des relais (87) et la gestion de huit sorties "tout ou rien" également découplées par les relais (87).

10. Dispositif conforme à la revendication 9, caractérisé en ce que la carte "entrées-sorties" "tout ou rien" (41) est reliée à une carte de découplage et de multiplexage (80) permettant l'acquisition de soixante quatre entrées "tout ou rien" (81) et la gestion de huit sorties "tout ou rien" (82) découplées par relais.

11. Dispositif conforme à l'une des revendications 1 à 10, caractérisé en ce que le terminal de vidéotélécommunication est un micro-ordinateur (12) adapté pour être relié au réseau téléphonique public (8).

## Claims

1. A device for aiding maintenance of electromechanical installations (1) which comprise automatic monitoring and control means (2, 3, 4) for monitoring and controlling the operation of said electromechanical installations (1) and for outputting information relating to the operation of said electromechanical installations (1), comprising :
   - means for connecting said device for aiding maintenance to said automatic monitoring and control means (2, 3, 4),
   - at least one external supervision video terminal (9, 10, 11),
   - a plurality of control units (5), each comprising means (50) for continuously analyzing and processing the information from said automatic monitoring and control means (2, 3, 4) and for analyzing interrogations from the video terminal (9, 10, 11) and transmitting said information thereto,
   characterized in that each control unit (5) is connected to an electromechanical installation to be supervised and in that said device for aiding maintenance further comprises a pilot control unit (45) providing communication via a public telephone network (8) between each control unit (5) and the video terminal (9, 10, 11), and a modem (7) connected on the one hand to said pilot control unit (45) and on the other hand to said public telephone network (8).

2. A device according to claim 1, the automatic means (2, 3, 4) for monitoring and control of the electromechanical installation (1) comprising an industrial programmable controller (25), characterized in that the industrial programmable controller is connected by way of a standard series quad connection circuit (6a) to the means (50) of the control unit (5) for analyzing the information from the automatic means (2, 3, 4) for monitoring and control of the electromechanical installation (1).

3. A device according to claim 1, the automatic means (2, 3, 4) for monitoring and control of the electromechanical installation (1) comprising a relay monitoring and control cabinet (40), characterized in that said relay cabinet (40) is connected by way of an on/off connection circuit (6b) and of an input/output interface circuit (41) to the means (50) of the control unit (5) for analyzing the information from the automatic means (2, 3, 4) for monitoring and control of the electromechanical installation (1).

4. A device according to one of claims 1 to 3, characterized in that each control unit (5) comprises a microprocessor (50) programmed to continuously analyze the information from the automatic means (2, 3, 4) for monitoring and control of the electromechanical installation (1) to be supervised, to process, store and register such information, to analyze interrogations from the external supervision terminal (12) and to transmit said information thereto in image form.

5. A device according to claim 4, characterized in that each control unit (5) is connected by way of a series or current loop standard quad connection circuit (21) to a printer (14) for local registering of the information from the electromechanical installation (1) to be supervised.

6. A device according to claim 4 or 5, characterized in that each control unit (5) further comprises a clock (70) for time and date stamping of the events stored in stack form by said control unit (5) and consultable by the external supervision terminal (12).

7. A device according to one of claims 1 to 6, characterized in that the pilot control unit (45) takes the form of an electronic circuit identical to that of said control units (5) and in that said pilot control unit (45) is connected to said control units (5) by way of a diffuser circuit (42) providing galvanic insulation between the pilot control unit (45) and said control units (5) and concentration of the corresponding connection circuits (46) to the modem (7).

8. A device according to claim 6, characterized in that each control unit further comprises an alkaline cell (57) to safeguard the stored events and the timing and dating thereof in the event of a power supply failure affecting the control unit (5).

9. A device according to one of claims 1 to 8, characterized in that the interface circuit between the relay cabinet (40) for monitoring and control of the electromechanical installation (1) to be supervised, and each corresponding control unit (5) comprises an on/off input/output card (41) enabling acquisition of

## EP 0 232 636 B1

sixteen on/off inputs decoupled by relays (87) and control of eight on/off outputs also decoupled by the relays (87).

10. A device according to claim 9, characterized in that the on/off input/output card (41) is connected to a decoupling and multiplexing card (80) enabling acquisition of sixty-four on/off inputs (81) and control of eight on/off relay-decoupled outputs (82).

11. A device according to one of claims 1 to 10, characterized in that the video terminal is a microcomputer (12) connectable to the public telephone network (8).

## Patentansprüche

1. Wartungshilfseinrichtung für elektromechanische Anlagen (1) mit automatischen Überwachungs- und Steuermitteln (2,3,4) zur Überwachung und Steuerung des Betriebes der elektromechanischen Anlagen (1) und zur Lieferung von Informationen über den Betrieb dieser elektromechanischen Anlagen (1), mit
   - Mitteln zum Verbinden der Wartungshilfseinrichtung mit den automatischen Überwachungs- und Steuermitteln (2,3,4),
   - mindestens einem externen Überwachungs-Videotelekommunikationsterminal (9,10,11) und
   - mehreren Steuereinheiten (5), deren jede Mittel (50) zum ständigen Analysieren und Verarbeiten der von den automatischen Überwachungs- und Steuermitteln (2,3,4) gelieferten Informationen und zum Analysieren von von dem Videotelekommunikationsterminal (9,10,11) kommenden Abfragen und Übertragen der zuvor genannten Informationen an das Videotelekommunikationsterminal enthält,
   dadurch gekennzeichnet, daß jede Steuereinheit (5) an eine zu überwachende elektromechanische Anlage angeschlossen ist und daß die Wartungshilfseinrichtung weiters eine Leit-Steuereinheit (45), mittels der jede Steuereinheit (5) über ein öffentliches Fernsprechnetz (8) mit dem Videotelekommunikationsterminal (9,10,11) in Verbindung steht, sowie ein Modem (7) enthält, das einerseits an die Leit-Steuereinheit (45) und andererseits an das öffentliche Fernsprechnetz (8) angeschlossen ist.

2. Einrichtung nach Anspruch 1, bei welcher die automatischen Überwachungs- und Steuermittel (2,3,4) der elektromechanischen Anlage (1) ein industrielles programmierbares Steuerwerk (25) enthalten, dadurch gekennzeichnet, daß dieses industrielle programmierbare Steuerwerk über eine vieradrige normierte serielle Verbindung (6a) an die Mittel (50) der Steuereinheit (5) zum Analysieren der von den automatischen Überwachungs- und Steuermitteln (2,3,4) der elektromechanischen Anlage (1) gelieferten Informationen angeschlossen ist.

3. Einrichtung nach Anspruch 1, bei welcher die automatischen Überwachungs- und Steuermittel (2,3,4) der elektromechanischen Anlage (1) einen Überwachungs- und Steuer-Relaisschrank (40) enthalten, dadurch gekennzeichnet, daß dieser Relaisschrank über eine binäre Verbindung (6b) und eine "Eingangs/Ausgangs"-Schnittstellenschaltung (41) an die Mittel (50) der Steuereinheit (5) zum Analysieren der von den automatischen Überwachungs- und Steuermitteln (2,3,4) der elektromechanischen Anlage (1) gelieferten Informationen angeschlossen ist.

4. Einrichtung nach einem der Ansprüche 1 bis 3, dadurch gekennzeichnet, daß jede Steuereinheit (5) einen Mikroprozessor (50) enthält, der so programmiert ist, daß er die von den automatischen Überwachungs- und Steuermitteln (2,3,4) der zu überwachenden Anlage (1) gelieferten Informationen ständig überwacht, diese Informationen verarbeitet, speichert und aufzeichnet und die von dem externen Überwachungsterminal (12) kommenden Abfragen analysiert und an dieses die genannten Informationen in Form von Bildern sendet.

5. Einrichtung nach Anspruch 4, dadurch gekennzeichnet, daß jede Steuereinheit (5) über eine normierte vieradrige serielle Verbindung oder Stromschleife (21) an einen Drucker (14) angeschlossen ist, der an Ort und Stelle die von der zu überwachenden elektromechanischen Anlage (1) kommenden Informationen aufzeichnet.

6. Einrichtung nach Anspruch 4 oder 5, dadurch gekennzeichnet, daß jede Steuereinheit (5) außerdem einen Zeitgeber (70) enthält, der die Ereignisse mit einer Zeitmarke versieht, die von der Steuereinheit (5) in Form von Stapeln gespeichert werden und von dem externen Überwachungsterminal (12) abgefragt werden können.

7. Einrichtung nach einem der Ansprüche 1 bis 6, dadurch gekennzeichnet, daß die Leit-Steuereinheit (45) von einer elektronischen Schaltung gebildet ist, die mit den Schaltungen der Steuereinheiten (5) übereinstimmt, und daß diese Leit-Steuereinheit (45) an die Steuereinheiten (5) über eine Verteilerschaltung (42) angeschlossen ist, die für die galvanische Entkopplung zwischen der Leit-Steuereinheit (45) und diesen Steuereinheiten und für die Konzentration der entsprechenden Verbindungen (46) auf das Modem (7) sorgt.

8. Einrichtung nach Anspruch 6, dadurch gekennzeichnet, daß jede Steuereinheit außerdem eine Alkalizelle (57) enthält, die für den Fall einer Unterbrechung der Stromversorgung der Steuereinheit (5) die gespeicherten Ereignisse und die Zeitmarken dieser Ereignisse sichert.

9. Einrichtung nach einem der Ansprüche 1 bis 8, dadurch gekennzeichnet, daß die Schnittstellenschaltung zwischen dem Überwachungs- und Steuer-Relaisschrank (40) der zu überwachenden elektromechanischen Anlage (1) und der entsprechenden Steuereinheit (5) eine binäre Eingangs/Ausgangs-Karte (41) enthält, die die Erfassung von sechzehn, durch Relais (87) entkoppelten binären Eingängen sowie die Verwaltung von acht, ebenfalls durch die Relais (87) entkoppelten Ausgängen ermöglicht.

10. Einrichtung nach Anspruch 9, dadurch gekennzeichnet, daß die binäre Eingangs/Ausgangs-Karte (41) an eine Entkopplungsund Multiplexerkarte (80) angeschlossen ist, die die Erfassung von 64 binären Eingängen (81) und die Verwaltung von acht, durch Relais entkoppelten binären Ausgängen (82) ermöglicht.

11. Einrichtung nach einem der Ansprüche 1 bis 10, dadurch gekennzeichnet, daß das Videotelekommunikationsterminal ein für den Anschluß an das öffentliche Fernsprechnetz (8) geeigneter Mikrocomputer (12) ist.

EP 0 232 636 B1

FIG_1

FIG. 2

FIG. 3

FIG_4

FIG.5

FIG_6

**FIG.7**

FIG.8

FIG. 9

FIG.10

SOUS-PROGRAMME DE COMMANDE 2 AFFICHAGE ECRAN

SOUS-PROGRAMME DE COMMANDE 1 LECTURE CLAVIER

SOUS-PROGRAMME DE COMMANDE 4 EMISSION CONTROLEUR

SOUS-PROGRAMME DE COMMANDE 3 RECEPTION CONTROLEUR

TACHE 1 GESTION ECRAN

TACHE 2 GESTION CLAVIER

TACHE 15 GESTION LIAISON CONTROLEUR

TACHE 10 ACQUISITION CHANGEMENT D'ETAT

MONITEUR

TACHE 8 GESTION DES TEMPORISATIONS

TACHE 5 GESTION IMPRIMANTE

SOUS-PROGRAMME DE COMMANDE 6 EMISSION IMPRIMANTE

FIG. 11

EP 0 232 636 B1

# FIG_12

AUTOMATISME DE
L'EQUIPEMENT ELECTROMECANIQUE 2

REPONSE    INTERROGATION

ANALYSE
REPONSE

Changement
d'Etat — Non

Oui

MISE EN
PILES

IMPRIMANTE 14

DEMANDE
IMPRESSION

RECHERCHE
EVENEMENTS

IMPRESSION
EVENEMENTS

PILES

RESEAU
TELEPHONIQUE 8

CONNEXION TERMINAL
DE VIDEOTELE-
COMMUNICATION 12

CHOIX
DIALOGUE
TERMINAL

VISUALISATION
DES PILES

VISUALISATION
STATISTIQUES

TRAITEMENT
MESURES

TRAITEMENT
HEURES

25